# EUROPEAN PATENT APPLICATION

(11) **EP 1 847 866 A2**
(43) Date of publication of application: **24.10.2007**
(21) Application number: 07100326.3
(22) Date of filing: 10.01.2007
(51) Int. Cl.: G02B 26/12, G06K 15/12

(54) **Multi-beam scanning unit and image forming apparatus having the same**

(30) Priority: 18.04.2006 KR 20060035069
(71) Applicant: Samsung Electronics Co., Ltd., Suwon-si 442-742 Gyeonggi-do (KR)
(72) Inventor: Yoo, Jae-hwan, Yongin-si (KR)
(74) Representative: Waddington, Richard

(57) **Abstract**

A multi-beam scanning unit is provided in which optical interference does not occur between a plurality of image-forming beams on an image-forming surface, and an image forming apparatus including the multi-beam scanning unit. The multi-beam scanning unit comprises a light unit (15) having a plurality of light-emitting points for irradiating laser beams, and a light unit controller (10) controlling the light-emitting points so that the adjacent light-emitting points do not start light emission simultaneously. A beam deflector (30) deflects laser beams irradiated by each of the light-emitting points on a photosensitive medium (50).

## Description

The present invention relates to a multi-beam scanning unit and an image forming apparatus having the same. More particularly, the present invention relates to a multi-beam scanning unit in which optical interference does not occur between a plurality of image-forming beams on an image-forming surface, and an image forming apparatus having the same.

Multi-beam scanning units scan a plurality of scan lines simultaneously by using a light source having a plurality of light-emitting points. Thus, a driving speed of a beam deflector, for example, revolutions per minute (RPM) of a polygonal rotating mirror, is reduced compared to single beam scanning units using a single beam, and the same scanning performance as that of the single beam scanning units or more excellent scanning performance than that of the single beam scanning units can be shown. Thus, in the multi-beam scanning units, high-speed printing can be performed even at high resolution and an apparatus having high reliability, and low noise can be realized as the driving speed of the beam deflector is reduced. As a result, the multi-beam scanning units have been used in image forming systems, such as laser printers, digital copying machines, and facsimiles.

The multi-beam scanning units include a semiconductor laser that has a plurality of light-emitting portions that can be controlled independently and emit a plurality of laser beams from the light-emitting portions. The multi-beam scanning units make a distance between the respective light-emitting portions of the semiconductor laser small, thereby controlling a distance between a plurality of scan lines that are simultaneously formed on a photosensitive medium in a predetermined range. Additionally, elements excluding the semiconductor laser, for example, a collimating lens, a polygonal rotating mirror, an f-θ lens, can be provided like in a single beam scanning unit for scanning a single laser beam.

Optical interference occurs in the conventional multi-beam scanning units due to a change in the amount of light.

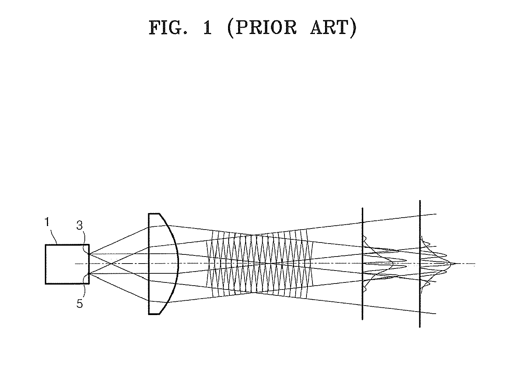

FIG. 1 is a schematic view of a proceeding beam irradiated by a laser light source 1 having first and second light-emitting portions 3 and 5, each of which irradiates a laser beam independently. Referring to FIG. 1, phase conjunction of laser beams irradiated by each of the first and second light-emitting portions 3 and 5 occurs during a high-speed operation of the laser light source 1 due to instantaneous cross-talk so that constructive interference or destructive interference occurs in an overlapped portion of the two laser beams. Interference between the laser beams causes optical power on an image-forming surface of a photosensitive medium to become larger or smaller than a predetermined value. This causes a difference in concentration of images during printing so that printing quality is lowered, such as a printed image being spotted.

One conventional construction for preventing image deterioration caused by interference between laser beams described above is disclosed in Japanese Patent Laid-open Publication No. 2005-55538 (entitled "Multi-Beam Laser Emission Unit and Image Forming Apparatus, published on March 3, 2005). A high-frequency oscillation circuit for overlapping a high-frequency signal is added to at least one light-emitting portion of a multi-beam light source so that an oscillation longitudinal mode is multiplied and interference between laser beams is suppressed. When the high-frequency oscillation circuit is added to suppress interference between the laser beams in this way, a circuit for oscillating a high frequency greater than about 300 MHz needs to be configured. Thus, the structure of a circuit unit becomes complicated and costs increase.

Accordingly, a need exists for an imager forming apparatus having a multi-beam scanning unit that substantially prevents optical interference.

The present invention provides a multi-beam scanning unit in which a light source-controlling structure is improved so that optical interference between laser beams may be suppressed without providing a calibration circuit or an additional mechanical adjusting structure, and an image-forming apparatus having the multi-beam scanning unit.

According to the present invention there is provided an apparatus and method as set forth in the appended claims. Preferred features of the invention will be apparent from the dependent claims, and the description which follows.

According to an aspect of the present invention, a multi-beam scanning unit comprises a light unit having a plurality of light-emitting points for irradiating laser beams, and a light unit controller for controlling the light-emitting points so that the adjacent light-emitting points do not start light emission simultaneously. A beam deflector is preferably operable to deflect laser beams irradiated by each of the light-emitting points on a photosensitive medium.

The light-emitting points are preferably arranged to be substantially perpendicular to a scan plane formed by a beam scanned by the beam deflector.

The light unit may be configured so that the light-emitting points are included in one light source.

The light unit may include a plurality of light sources each having at least one light-emitting point.

The light unit may include three or more light-emitting points and the light unit controller may be operable to control the light unit so that the non-adjacent light-emitting points start light emission substantially simultaneously.

The light unit controller may be operable to control the light-emitting points so that a predetermined portion of light-emission times of the adjacent light-emitting points overlap each other.

The light unit may include three or more light sources and the light unit controller may be operable to control the light unit so that the non-adjacent light sources start light emission substantially simultaneously.

According to another aspect of the present invention, an image forming apparatus comprises a developing unit having a photosensitive medium, and a multi-beam scanning unit for forming an electrostatic latent image by scanning a laser beam on the photosensitive medium. A transfer unit preferably corresponds to the developing unit and is operable to transfer an image formed in the developing unit onto a printing medium. A fusing unit is preferably operable to fuse the transferred image on the printing medium. The multi-beam scanning unit preferably comprises a light unit having a plurality of light-emitting points for irradiating laser beams, and a light unit controller for controlling the light-emitting points so that the adjacent light-emitting points do not start light emission simultaneously. A beam deflector is preferably operable to deflect laser beams irradiated by each of the light-emitting points on a photosensitive medium.

Other objects, advantages and salient features of the invention will become apparent from the following detailed description, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:
FIG. 1 is a schematic view of a change of light amount caused by interference of a conventional multi-beam scanning unit;
FIG. 2 is a schematic perspective view of an optical arrangement of a multi-beam scanning unit according to an exemplary embodiment of the present invention;
FIG. 3 is a schematic elevational view of a path of beams in a subscanning direction of the multi-beam scanning unit illustrated in FIG. 2;
FIGS. 4A and 4B respectively illustrate an arrangement of light-emitting points and image-forming positions of two beams on a surface to be scanned when light sources having two light-emitting points are disposed in a direction substantially perpendicular to a scan plane;
FIG. 4C illustrates the arrangement relationship of first through third light-emitting points disposed in a direction substanstially perpendicular to the scan plane when a light source having three light-emitting points is employed;
FIGS. 5A through 5D illustrate a graphical comparison of an on/off control of light-emitting points according to an exemplary embodiment of the present invention with an on/off control of light-emitting points according to a comparison example;
FIGS. 6A through 6C illustrate a graphical comparison of an on/off control of light-emitting points according to another exemplary embodiment of the present invention with an on/off control of light-emitting points according to a comparison example;
FIG. 7A is a schematic perspective view of an arrangement of light sources of a multi-beam scanning unit according to another exemplary embodiment of the present invention;
FIG. 7B illustrates the relationship of an arrangement of first and second light sources in which two light sources having light-emitting points are disposed in a direction substantially perpendicular to a scan plane; and
FIG. 8 is a schematic elevational view in partial cross section of an image forming apparatus according to an exemplary embodiment of the present invention.

Throughout the drawings, like reference numerals will be understood to refer to like parts, components and structures.

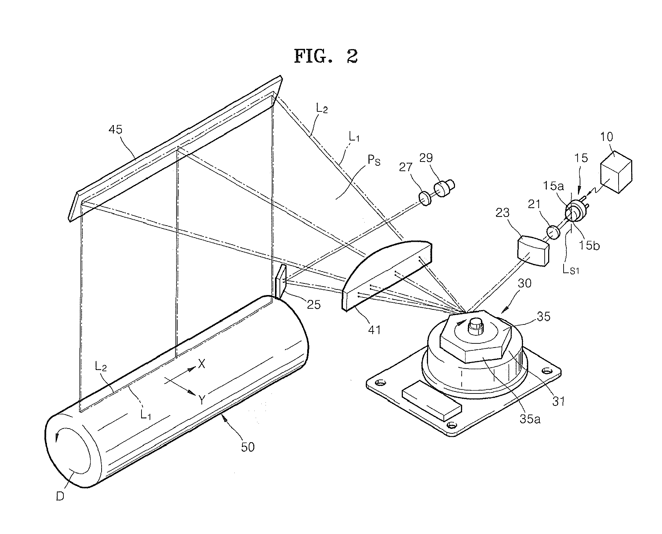

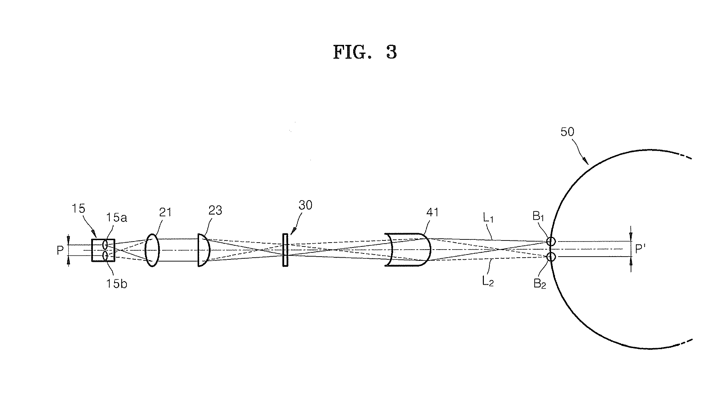

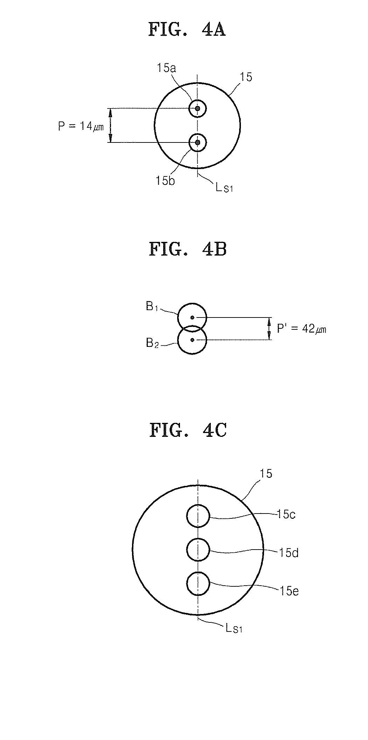

FIG. 2 is a schematic perspective view of an optical arrangement of a multi-beam scanning unit according to an exemplary embodiment of the present invention. FIG. 3 is a schematic elevational view of a path of beams in a subscanning direction of the multi-beam scanning unit illustrated in FIG. 2. FIGS. 4A and 4B respectively illustrate an arrangement of light-emitting points and image-forming positions of two beams on a surface to be scanned when light units having two light-emitting points with respect to the multi-beam scanning unit of FIG. 2 are disposed at a predetermined angle with respect to a scan plane. For example, the light units are disposed substantially perpendicularly to the scan plane.

Referring to FIGS. 2, 3, 4A, and 4B, the multi-beam scanning unit scans light on a photosensitive medium 50 on which a surface to be exposed is moved in a direction indicated by the arrow D. The multi-beam scanning unit includes a light unit 15 that irradiates a plurality of laser beams to be separated from one another in a subscanning direction Y by a predetermined gap, a light source controller 10 that controls the light unit 15, and a beam deflector 30 that deflects and scans each of laser beams irradiated from the light unit 15 in a main scanning direction X of the photosensitive medium 50.

A polygonal mirror device having the above structure may be used as the beam deflector 30. The polygonal mirror device includes a driving source 31 and a polygonal mirror 35 rotatably installed on the driving source 31. The polygonal mirror 35 includes a plurality of reflective surfaces 35a formed at a side of the polygonal mirror 35, and is rotated and driven and deflects and scans incident light. The beam deflector 30 is not limited to the polygonal mirror device having the above structure and a hologram disc type beam deflector or a Galvanomirror type scanning device that deflects and scans incident beams may be also used as the beam deflector 30.

A collimating lens 21 and a cylinder lens 23 may be further provided on a light path between the light unit 15 and the beam deflector 30. The collimating lens 21 focuses a multi-beam irradiated from the light unit 15 to be a parallel beam or a converged beam. The cylinder lens 23 focuses a beam passing the collimating lens 21 in a direction corresponding to the main scanning direction X and/or the subscanning direction Y to be an incident beam, thereby linearly forming the incident beam on the beam deflector 30. The cylinder lens 23 includes at least one lens.

Additionally, the multi-beam scanning unit may further include an f-θ lens 41 and a synchronization signal detecting unit.

The f-θ lens 41 is disposed between the beam deflector 30 and the photosensitive medium 50. The f-θ lens 41 includes at least one lens and corrects light deflected by the beam deflector 30 in the main scanning direction X and in the subscanning direction Y at different magnifications so that an image may be formed on the photosensitive medium 50.

The synchronization signal detecting unit receives a portion of beams irradiated from the light unit 15 and is used to horizontally synchronize a scan beam. To this end, the synchronization signal detecting unit includes a synchronization signal detecting sensor 29 that receives a portion of beams deflected by the beam deflector 30 and passing the f-θ lens 41, a mirror 25 that is disposed between the f-θ lens 41 and the synchronization signal detecting sensor 29 and changes a proceeding path of an incident beam, and a focusing lens 27 that focuses the beam reflected from the mirror 25.

Additionally, a reflecting mirror 45 may be further provided between the f-θ lens 41 and the photosensitive medium 50. The reflecting mirror 45 reflects beams from the beam deflector 30 to form scan lines L₁ and L₂ on the surface of the photosensitive medium 50 to be exposed.

The light unit 15 includes a plurality of light-emitting points which are on/off controlled by the light unit controller 10 and respectively irradiate a laser beam corresponding to an image signal. Thus, the laser beam irradiated by the light unit 15 is scanned as a plurality of laser beams on the surface to be exposed of the photosensitive medium 50 in the subscanning direction Y.

In the current exemplary embodiment, for explanatory conveniences, the light unit 15 having first and second light-emitting points 15a and 15b will now be described. The light unit 15 may include an edge emitting laser diode (EELD) that irradiates a laser beam in a latitudinal direction or a vertical cavity surface emitting laser that irradiates a laser beam on a top surface of a substrate, such as a semiconductor laser.

A distance between the first and second light-emitting points 15a and 15b, that is, a light source pitch P, may be within 100 µm, for example, about 14 µm. The reason for setting the light source pitch P in this way is as follows.

A distance between the first and second scan lines L₁ and L₂ simultaneously irradiated on the photosensitive medium 50 is determined by a distance P between adjacent light-emitting points of a plurality of light-emitting points, which means a pitch of a light source, that is, a distance P between the center of the first light-emitting point 15a and the center of the second light-emitting point 15b, and optical magnification of a scanning optical system which will be described later.

For example, in the multi-beam scanning unit having a resolution of 600 dpi, a distance between the center of an image-forming point B₁ and the center of an image-forming point B₂, which are formed on the photosensitive medium 50 by the scan lines L₁ and L₂, should be about 42 µm (= 1 inch/600 dots). Thus, when optical magnification of the scanning optical system in the subscanning direction Y is designed three times of that of a general scanning optical system, the light source pitch is about 14 µm (=42 µm/3). The optical magnification of the scanning optical system in the subscanning direction Y means a ratio of a distance P' between the two image-forming points B₁ and B₂ formed on the photosensitive medium 50 to a distance P in the Y-direction between the center of the first light-emitting point 15a and the center of the second light-emitting point 15b.

Additionally, the first and second light-emitting points 15a and 15b are arranged on one straight line L_{S1} on an emission surface of the light unit 15. The straight line L_{S1} forms a predetermined angle with respect to a scan plane P_{S} formed by a beam scanned by the beam deflector 30. The first and second light-emitting points 15a and 15b are arranged on the straight line L_{S1} within the range of optical interference. For example, the straight line L_{S1} may be substantially perpendicular to the scan plane P_{S}.

Even when the light unit 15 includes three or more light-emitting points, as illustrated in FIG. 4C, all of light-emitting points are arranged on the above-described straight line L_{S1}. Thus, when the light-emitting points are arranged to be inclined with respect to the scan plane P_{S} so that optical interference does not occur between the adjacent light-emitting points, a difference between scan starting positions of the adjacent light-emitting points in the main scanning direction x is generated. However, by arranging the light-emitting points as shown in FIGS. 4A and 4C, the above-mentioned difference is not generated. Thus, there are advantages in which the design of optical elements, which will be described later, is simplified and an additional circuit for correcting the above-described difference is not necessary.

When the first and second light-emitting points 15a and 15b are arranged as described above, the two image-forming points B₁ and B₂ formed on the photosensitive medium 50 are arranged close to each other so that portions thereof are overlapped with each other, as illustrated in FIG. 4B. Thus, in the conventional multi-beam scanning unit, optical interference between two beams may occur. This is also applied when the light unit 15 having three light-emitting points 15c, 15d, and 15e are arranged along L_{S1}, which is the segment in a direction substantially perpendicular to the scan plane P_{S}, as illustrated in FIG. 4C.

The exemplary embodiments of the present invention are characterized in that, when forming the two image-forming points B₁ and B₂ that may be spatially overlapped with each other, a control mechanism of the light unit 15 using the light unit controller 10 is improved and optical interference between adjacent beams is prevented.

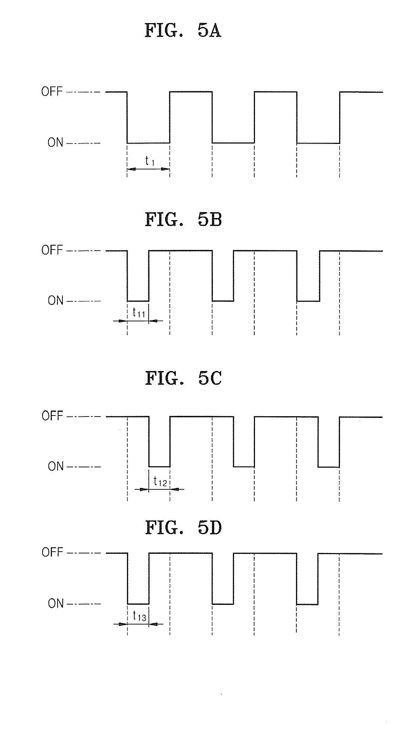

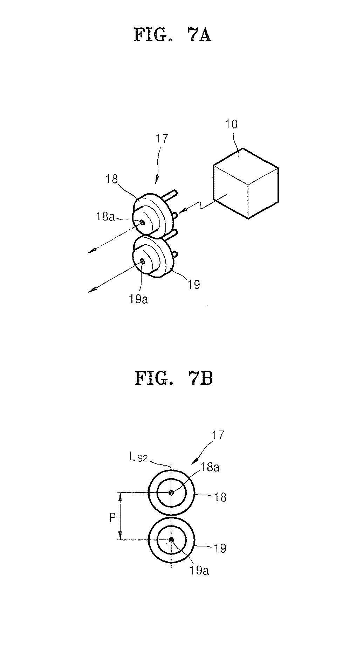

The case where the light-emitting points are disposed as illustrated in FIGS. 4A and 4C will now be described in greater detail with reference to FIGS. 5A through 5D and 6A through 6C.

FIGS. 5A through 5D illustrate a graphical comparison of on/off control of light-emitting points according to an exemplary embodiment of the present invention with on/off control of light-emitting points according to a comparison example.

FIG. 5A illustrates a conventional 1-dot on/off control. Referring to FIG. 5A, in light-emitting point on/off control according to the comparison example, light-emitting points are on driven during a time period t₁ which is a 1-dot on time, without classification of light-emitting points.

FIG. 5B illustrates 1-dot on/off control of first light-emitting points 15a and 15c according to an exemplary embodiment of the present invention. FIG. 5C illustrates 1-dot on/off control of second light-emitting points 15b and 15d. FIG. 5D illustrates 1-dot on/off control of a third light-emitting point 15e. Referring to FIGS. 5B through 5C, the light unit controller (10 of FIG. 2) independently on/off controls the plurality of light-emitting points 15a through 15e so that the adjacent light-emitting points do not start light emission simultaneously.

Referring to FIGS. 4A, 5B, and 5C, the light unit controller controls the plurality of light-emitting points 15a and 15b so that the first and second light-emitting points 15a and 15b do not start light emission simultaneously. That is, the light unit controller controls the first light-emitting point 15a during a time period t₁₁ that is a first half of the ON control time t₁ and controls the second light-emitting point 15b during a time period t₁₂ that is a second half of the ON control time t₁.

Referring to FIGS. 4C, 5B, 5C, and 5D the light unit controller controls the plurality of light-emitting points 15c, 15d and 15e so that the first and second light-emitting points 15c and 15d do not start light emission simultaneously. That is, the light unit controller controls the first light-emitting point 15c during a time period t₁₁ that is a first half of the ON control time t₁ and controls the second light-emitting point 15d during a time period t₁₂ that is a second half of the ON control time t₁. Similarly, the light unit controller controls the plurality of light-emitting points 15c through 15e so that the second light-emitting point 15d and the third light-emitting point 15e do not start light emission simultaneously.

Additionally, when the light unit controller 10 includes three or more light-emitting points, the light unit controller 10 controls the light-emitting points so that non-adjacent light-emitting points start light emission substantially simultaneously. For example, referring to FIG. 4C, the light unit controller 10 controls the light-emitting points so that the first light-emitting point 15c and the third light-emitting point 15e start light emission substantially simultaneously. That is, the light unit controller 10 controls the light-emitting points so that starting position and time of an ON control time t₁₃ of the third light-emitting point 15e is the same as that of an ON control time t₁₁ of the first light-emitting point 15c.

FIGS. 6A through 6C illustrate a graphical comparison of on/off control of light-emitting points according to another exemplary embodiment of the present invention with on/off control of light-emitting points according to a comparison example.

FIG. 6A illustrates an example of conventional 1-dot on/off control. Referring to FIG. 6A, the light-emitting point on/off control according to the comparison example ON drives the light-emitting points during a time period t₂ which is a 1-dot on time, without classification of the light-emitting points.

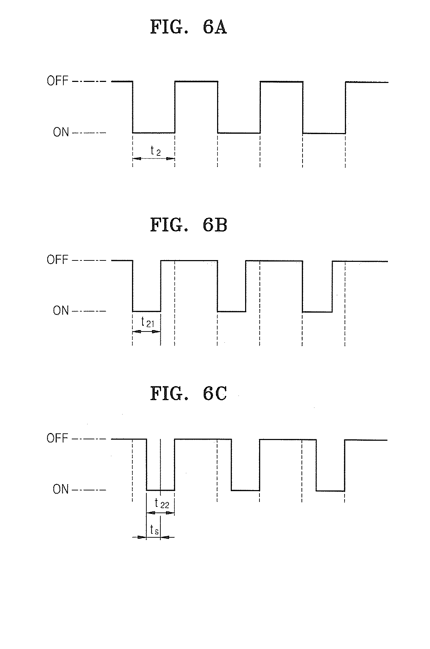

FIG. 6B illustrates 1-dot on/off control of the first light-emitting point 15a according to an exemplary embodiment of the present invention. FIG. 6C illustrates 1-dot on/off control of the second light-emitting point 15b. Referring to FIGS. 6A and 6C, the light unit controller (10 of FIG. 2) independently on/off controls the first and second light-emitting points 15a and 15b so that adjacent light-emitting points, that is, the first light-emitting point 15a and the second light-emitting point 15b do not start light emission simultaneously. That is, the light unit controller 10 controls the first light-emitting point 15a during a time period t₂₁ that is a first half of an ON control time t₂ and controls the second light-emitting point 15b during a time period t₂₂ that is a second half of the ON control time t₂. This is the same as in on/off control illustrated in FIGS. 5B through 5D. In the current exemplary embodiment, unlike FIGS. 5B through 5D, the light unit controller 10 may control the first and second light-emitting points 15a and 15b so that an emission time of the first light-emitting point 15a and an emission time of the second light-emitting point 15b overlap each other during a predetermined time period tₛ. That is, the light unit controller 10 controls the first and second light-emitting points 15a and 15b so that an end part of the first half time t₂₁ and a front part of the second half time t₂₂ of the ON control time t₂ overlap each other during a time period tₛ. At this time, the overlapping time tₛ of light irradiated from the first and second light-emitting points 15a and 15b may be selected to have various values according to optical sensitivity of the photosensitive medium 50 that forms a surface to be scanned.

As described above, the light-emitting points are arranged to be substantially perpendicular to the scan plane. Light-emitting points of which lights do not interfere are controlled to start light emission simultaneously. The adjacent light-emitting points are controlled to start light emission at a predetermined time difference therebetween. As a result, optical interference does not occur between lights irradiated from each of the light-emitting points. Furthermore, since the light-emitting points are arranged to be substantially perpendicular to the scan plane, a difference does not occur in a scan starting position. Additionally, the exemplary embodiments of the present invention may be applied even when adjacent light-emitting points are arranged to be inclined at a predetermined angle and are arranged at intervals in which interference occurs. A large difference does not occur in the scan starting position at intervals in which the adjacent light-emitting points cause interference. Thus, there is an advantage that an additional mechanical structure or circuit for correcting an optical difference is not needed.

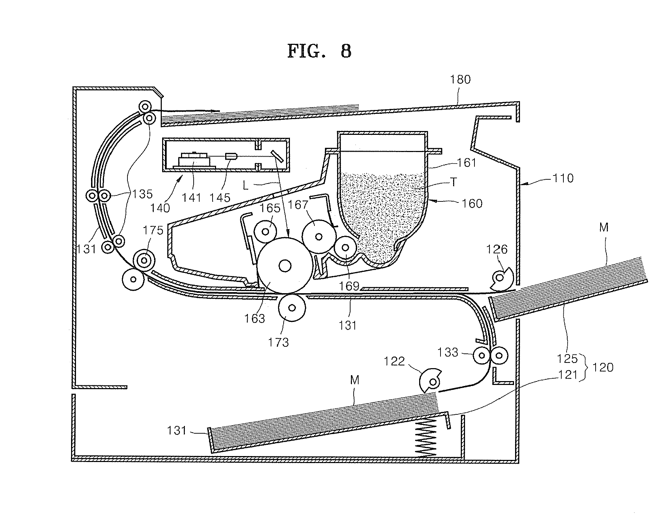

FIG. 7A is a schematic perspective view of an arrangement of light sources of a multi-beam scanning unit according to another exemplary embodiment of the present invention. FIG. 7B illustrates the relationship of an arrangement of first and second light sources in which two light sources having light-emitting points are disposed in a direction substantially perpendicular to a scan plane.

The multi-beam scanning unit of FIG. 7A is different from the multi-beam scanning unit illustrated in FIG. 2 in the structure of a light unit 17 for irradiating laser beams. Other elements of FIG. 7A are substantially the same as those of FIG. 2. Thus, a detailed description thereof is omitted.

The light unit 17 scans light on a photosensitive medium (50 of FIG. 2) on which a surface to be exposed is moved. The light unit 17 irradiates a plurality of laser beams to be separated from one another in a subscanning direction by a predetermined gap.

The light unit 17 includes a plurality of light sources that are on/off controlled by the light unit controller 10 and respectively irradiate laser beams corresponding to an image signal. In the current exemplary embodiment, for explanatory conveniences, first and second light sources 18 and 19 will now be described. The first and second light sources 18 and 19 are semiconductor lasers and may be edge emitting laser diodes (EELDs) or vertical cavity surface emitting lasers.

Each of the first and second light sources 18 and 19 have light-emitting points for irradiating laser beams, that is, first and second light-emitting points 18a and 19a. A distance between the first and second light-emitting points 18a and 19a, that is, a light source pitch P, may be within 100 µm, for example, about 14 µm. The first light-emitting point 18a and the second light-emitting point 19a are arranged on one straight line L_{S2} on an emission surface of the light unit 17 within the range of the optical interference. The straight line L_{S2} may be inclined at a predetermined angle or substantially perpendicular to the scan plane P_{S} formed by a beam scanned by the beam deflector (30 of FIG. 2). Each of the first and second light-emitting points 18a and 19a disposed in this way are driven and controlled in substantially the same manner as described with reference to FIGS. 5A through 5D and 6A through 6C.

FIGS. 7A and 7B illustrate the light unit 17 having the first and second light sources 18 and 19 each having one light-emitting point. However, this is just one example. Each of the first and second light sources 18 and 19 may be a light source having a plurality of light-emitting points. Additionally, three or more light sources disposed along one straight line L_{S2} may be used as the light unit 17.

FIG. 8 is a schematic cross-sectional view of an image forming apparatus according to an exemplary embodiment of the present invention. Referring to FIG. 8, the image forming apparatus includes a cabinet 110, a developing unit 160 mounted in the cabinet 110, a multi-beam scanning unit 140 for forming an electrostatic latent image, a transfer unit 173 for transferring an image formed in the developing unit 160, and a fusing unit 175 for fusing the transferred image on a printing medium.

The cabinet 110 forms the external shape of the image forming apparatus. A discharging unit 180 on which a discharged printing medium M is mounted is disposed outside the cabinet 110. Additionally, a supply unit 120 on which a printing medium M to be supplied is mounted is disposed in the cabinet 110 to be attached or detached thereto or therefrom. The printing medium M supplied through the supply unit 120 is conveyed in a direction of the developing unit 160 via a conveying path 131.

The supply unit 120 includes a first supply portion 121 used to automatically supply the printing medium M and a second supply portion 125 used to manually supply the printing medium M. The first supply portion 121 is disposed inside the cabinet 110 and supplies the stacked printing medium M by rotation of a first feeding roller 122. The second supply portion 125 is installed outside the cabinet 110 and supplies the printing medium M via the conveying path 131 by rotation of the second feeding roller 126.

The conveying path 131 is disposed inside the cabinet 110. The printing medium M supplied through the supply unit 120 is conveyed via the conveying path 131 and includes a plurality of conveying rollers 133 and 135. Only a path supplied through the first and second supply portions 121 and 125 of the conveying path 131 is divided into two parts, and a path that is conducive to image formation and a discharging path are single paths.

The developing unit 160 includes a toner container 161 in which toner T of a predetermined color is accommodated, and an image forming portion to which the toner T is supplied from the toner container 161 and that is conducive to image formation.

The image forming portion includes a photosensitive medium 163 that responds to a plurality of laser beams L scanned by the multi-beam scanning unit 140, a charger 165 that charges the photosensitive medium 163 to a predetermined potential, a developing roller 167 that is disposed to face the photosensitive medium 163 and develops toner in an electrostatic latent image on the photosensitive medium 163, and a supply roller 169 that supplies the toner T to the developing roller 167.

The multi-beam scanning unit 140 scans light onto the photosensitive medium 163 so that the electrostatic latent image may be formed on the photosensitive medium 163. The multi-beam light scanning unit 140 includes a light unit (15 of FIG. 2), a beam deflector 141, and an f-θ lens 145. Here, the light unit 15 has a plurality of light-emitting points for irradiating laser beams. The plurality of light-emitting points are arranged to be substantially perpendicular to a scan plane formed by beams scanned by the beam deflector 141. Each of the light-emitting points is independently on/off controlled by a light unit controller (10 of FIG. 2). That is, the light-emitting points are controlled by the light unit controller 10 so that the adjacent light-emitting points do not start light emission simultaneously. In this way, the light unit controller 10 controls the light-emitting points so that light emission simultaneously starts at light-emitting points of which lights do not interfere. The adjacent light-emitting points are controlled to start light emission at a predetermined time difference therebetween. As a result, optical interference may be substantially prevented from occurring between lights irradiated from each of the light-emitting points. The structure and principle of the multi-beam scanning unit 140 are the same as those of the multi-beam scanning unit illustrated in FIG. 2 described previously, and thus a detailed description thereof is omitted.

The transfer unit 173 is disposed to face the photosensitive medium 163 in the state where the printing medium conveyed via the conveying path 131 is placed between the transfer unit 173 and the photosensitive medium 163. The transfer unit 173 transfers the image formed on the photosensitive medium 163 onto the supplied printing medium. The image transferred onto the printing medium by the transfer unit 173 is fused by the fusing unit 175.

The multi-beam scanning unit having the above-described structure and the image forming apparatus having the same employs a light unit having a structure in which a plurality of laser beams may be simultaneously irradiated and each of the light-emitting points are arranged substantially perpendicularly to the scan plane so that a difference does not occur in a scan starting position.

Additionally, the light unit controller controls the light-emitting points so that light emission simultaneously starts at light-emitting points of which lights do not interfere. The adjacent light-emitting points are controlled to start light emission at a predetermined time difference therebetween. As a result, optical interference may be substantially prevented from occurring between lights irradiated from each of the light-emitting points.

Thus, an additional mechanism structure or circuit for correcting an optical difference is not needed so that the entire structure may be made more compactly.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multi-beam scanning unit, comprising:
a light unit (15) having a plurality of light-emitting points for irradiating laser beams;
a light unit controller (10) for controlling the plurality of light-emitting points so that adjacent light-emitting points do not start light emission simultaneously; and
a beam deflector (30) for deflecting laser beams irradiated by each of the light-emitting points onto a photosensitive medium (50).

2. The multi-beam scanning unit of claim 1, wherein the plurality of light-emitting points are arranged to be inclined at a predetermined angle with respect to a scan plane formed by a beam scanned by the beam deflector (30).

3. The multi-beam scanning unit of claim 1, wherein the plurality of light-emitting points are arranged to be substantially perpendicular to a scan plane formed by a beam scanned by the beam deflector (30).

4. The multi-beam scanning unit of any preceding claim, wherein the light unit (15) is configured so that the plurality of light-emitting points are included in one light source.

5. The multi-beam scanning unit of any preceding claim, wherein the light unit (15) includes a plurality of light sources each having at least one light-emitting point.

6. The multi-beam scanning unit of claim 4, wherein the light unit (15) includes three or more light-emitting points.

7. The multi-beam scanning unit of claim 6, wherein the light unit controller (10) is operable to control the light unit (15) so that non-adjacent light-emitting points start light emission substantially simultaneously.

8. The multi-beam scanning unit of any preceding claim, wherein the light unit controller (10) is operable to control the plurality of light-emitting points so that a predetermined portion of light-emission times of the adjacent light-emitting points overlap each other.

9. The multi-beam scanning unit of claim 5, wherein the light unit (15) includes three or more light sources; and
the light unit controller (10) is operable to control the light unit (15) so that non-adjacent light sources start light emission substantially simultaneously.

10. An image forming apparatus, comprising:
a developing unit (160) having a photosensitive medium (163);
a multi-beam scanning unit (140) for forming an electrostatic latent image by scanning a laser beam on the photosensitive medium (163);
a transfer unit (173) corresponding to the developing unit (160) and being operable to transfer an image formed in the developing unit (160) onto a printing medium (M); and
a fusing unit (175) for fusing the transferred image on the printing medium (M),
wherein the multi-beam scanning unit (140), comprises: a light unit (15) having a plurality of light-emitting points for irradiating laser beams;
a light unit controller (10) for controlling the plurality of light-emitting points so that adjacent light-emitting points do not start light emission simultaneously; and
a beam deflector (141) for deflecting laser beams irradiated by each of the light-emitting points onto a photosensitive medium (163).

11. The image forming apparatus of claim 10, wherein the plurality of light-emitting points is arranged to be inclined at a predetermined angle with respect to a scan plane formed by a beam scanned by the beam deflector (141).

12. The image forming apparatus of claim 10, wherein the plurality of light-emitting points is arranged to be substantially perpendicular to a scan plane formed by a beam scanned by the beam deflector (141).

13. The image forming apparatus of any one of claims 10 to 12, wherein the light unit (15) is configured so that the plurality of light-emitting points are included in one light source.

14. The image forming apparatus of any one of claims 10 to 12, wherein the light unit (15) includes a plurality of light sources each having at least one light-emitting point.

15. The image forming apparatus of any one of claims 10 to 13, wherein the light unit (15) includes three or more light-emitting points.

16. The image forming apparatus of claim 15, wherein the light unit controller (10) is operable to control the light unit (15) so that non-adjacent light-emitting points start light emission substantially simultaneously.

17. The image forming apparatus of any one of claims 10 to 16, wherein the light unit controller (10) is operable to control the plurality of light-emitting points so that a predetermined portion of light-emission times of the adjacent light-emitting points overlap each other.

18. The image forming apparatus of claim 14, wherein the light unit (15) includes three or more light sources; and
the light unit controller (10) is operable to control the light unit (15) so that non-adjacent light sources start light emission substantially simultaneously.
